# EUROPEAN PATENT SPECIFICATION

(11) **EP 2 673 584 B1**
(45) Date of publication and mention of the grant of the patent: **14.10.2015**
(21) Application number: 12701923.0
(22) Date of filing: 06.02.2012
(51) Int. Cl.: F28D 9/00, B01D 53/26

(54) **APPARATUS FOR PROCESSING A GAS**
VORRICHTUNG ZUR GASBEHANDLUNG
APPAREIL POUR TRAITER UN GAZ

(30) Priority: 07.02.2011 IT PD20110031
(43) Date of publication of application: 18.12.2013
(73) Proprietor: M.T.A. S.p.A., 35026 Conselve PD (IT)
(72) Inventor: BERNARDINELLO, Stefano, I-35021 Villatora di Saonara (PD) (IT); BOTTAZZO, Andrea, I-35020 Ponte San Nicolò (PD) (IT)
(74) Representative: Locas, Davide
(86) International application number: PCT/EP2012/051926
(87) International publication number: WO 2012/107380

(56) References cited:
- EP-A1- 1 464 887
- EP-A2- 1 293 242
- EP-A2- 1 593 924

## Description

The present invention relates to an apparatus for processing a gas, in particular intended to reduce the content of moisture in a humid compressed air flow, of the type including the features set out in the preamble of the main claim.

In the context of technical plants for processing gases, there is known the use of dryers for reducing the content of moisture from a humid compressed air flow, separating it via condensation into drier air and condensed aqueous vapour.

Typically, those plants comprise a first heat exchanger and a second heat exchanger, the second being arranged downstream of the first.

In the first heat exchanger, the compressed air introduced exchanges heat with the dried air in the dryer itself before being discharged therefrom. In the second exchanger, the air is cooled by exchanging heat with a refrigerating fluid in order to reduce the temperature and to cool the air as far as a condensation point or dew point.

At the outlet of the second exchanger, the air cooled in that manner is conveyed to a condensate separator which separates and removes the water from the air.

Finally, as referred to above, the cooled and dried air is conveyed towards the first exchanger, where the heat exchange is carried out with the humid air being introduced in order then to be discharged from the plant.

Those components are normally contained inside a box-like body and therefore make the dryer an autonomous unit which may be used within more complex systems.

In accordance with the structural requirements but also on the basis of principles of optimizing the dryer, there are used various configurations for positioning and sizing the exchangers and the box-like body which contains them.

An example of that type of plant is described in European Patent EP1464887B1, in which there is set out a dryer in which the box-like body defines a substantially U-like course of the air, with the exchangers arranged one aligned with the other and positioned in the region of a member of the U. Another example of a dryer is described in European Patent Application EP1081445A2, in which the exchangers are again arranged in alignment in a lower portion of the box-like body.

Although those examples of dryers constitute valid constructions from the functional point of view, they may be adapted only with difficulty to the various design requirements because those constructions, in accordance with variations in the design data, require complete redesigning and consequent sizing.

Consequently, the design and production step of the dryers known is often excessively complex and is therefore generally not very efficient both from the point of view of costs and in terms of construction times.

Furthermore, the need for constructing specific components in accordance with the design requirements prevents the manufacturers of dryers from complying with the various requirements in good time unless a complete range of components is held in store with consequent logistical difficulties.

Therefore, the technical problem addressed by the present invention is to provide an apparatus for drying gas which allows the disadvantages mentioned above with reference to the prior art to be overcome.

That problem is solved by the apparatus for drying a gas according to claim 1 and by the construction method thereof according to claim 9.

The present invention has some relevant advantages. The main advantage involves the fact that the apparatus according to the present invention can be adapted to the different design requirements in an economic and simple manner.

In addition, the apparatus according to the present invention may be constructed by a series of components which are basically common, therefore requiring fewer components in store and it may consequently be produced with greater efficiency from the logistical point of view as well as in terms of production times and costs.

Other advantages, features and the methods of use of the present invention will become clear from the following detailed description of some embodiments, given by way of non-limiting example. Reference will be made to the Figures of the appended drawings, in which:
- Figure 1 is a schematic illustration, in accordance with a lateral section, which illustrates an apparatus for drying a gas according to the present invention;
- Figure 2 is a perspective view of the apparatus of Figure 1;
- Figure 3 is a functional diagram which illustrates the function of the apparatus of Figure 1;
- Figure 4 is a perspective view which illustrates two heat exchangers, details of the apparatus according to the present invention;
- Figures 5 and 6 are a perspective broken-away view and an exploded view of basic elements which form the exchangers of Figure 4, respectively; and
- the Figures from 7A to 7D are side views of heat exchangers which have the same spatial requirement and different levels of effectiveness of heat exchange.

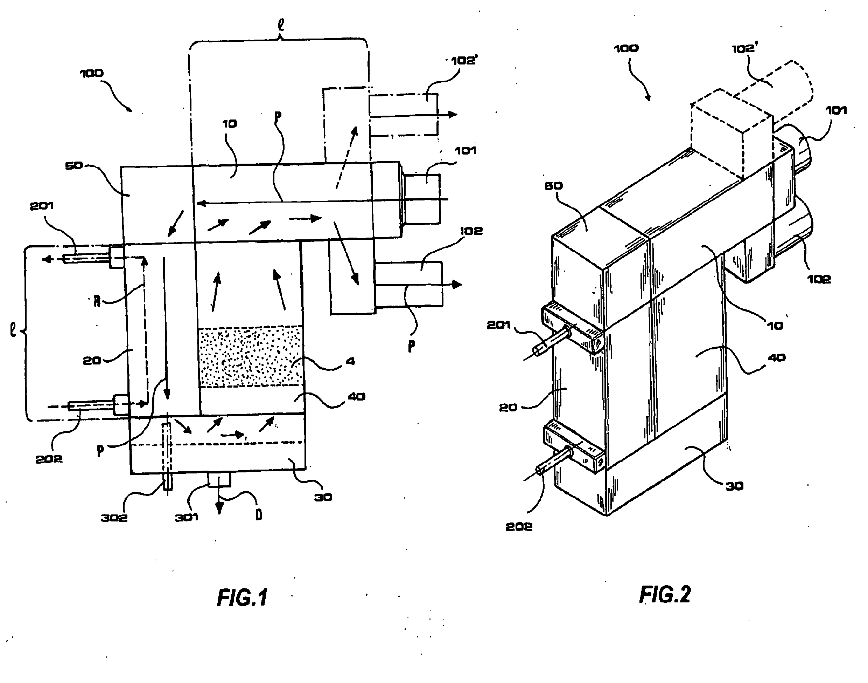

With reference first to Figure 1, an apparatus for drying a gas to be processed, in particular humid compressed air, is generally designated 100.

The apparatus 100 is constructed by means of a box-like body, inside which the gas to be processed travels along a course which is generally designated P and which will be described in greater detail below.

The apparatus comprises an inlet 101 for the gas to be processed, which is positioned in the region of an upper arm of the box-like body and which defines a first horizontal portion 10 of the operating course P of the gas.

It must be understood that the orientation of the apparatus 100 may be unambiguously identified with reference to a vertical discharge direction of the condensate D, naturally defined by the direction of falling of the condensate drops from an outlet 301 owing to gravitational force.

Therefore, the horizontal direction will be the direction perpendicular relative to the vertical discharge direction D and the upper side of the apparatus will be the side vertically opposite the position of the condensate outlet 301.

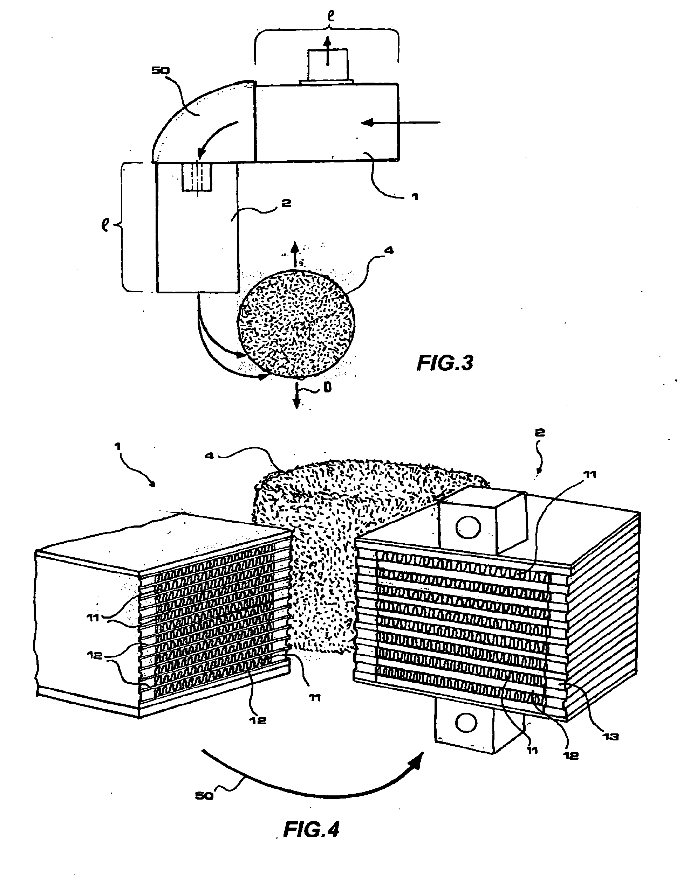

With reference also to Figure 3, therefore, the first horizontal portion 10 is defined by a first exchanger 1, in which the gas to be processed is introduced from the inlet 101 in such a manner as to be subjected to a first heat exchange in accordance with methods which will be better described below.

At the outlet of the first exchanger 1, the gas to be processed is directed through a connection element 50 which redirects the course of the gas downwards substantially through 90° in the direction of a second exchanger 2 which defines a first vertical portion 20 in the box-like body of the apparatus 101.

Consequently, the first exchanger 1 and the second exchanger 2 are arranged in such a manner that the flow of gas to be processed in the first exchanger 1 is substantially perpendicular to the flow of gas to be processed in the second exchanger 2, in other words forming a complete course for the gas to be processed in an L-like manner. More specifically, the cross-section of the apparent flow which is available to the gas to be processed is substantially the same for the two exchangers 1 and 2, being established by the box-like body which contains them.

As may be appreciated from the Figures and as will be set out in greater detail below, the portions over which the exchangers extend, that is to say, the first horizontal portion 10 and the first vertical portion 20, have a substantially equal longitudinal extent I and, therefore, the course of the gas to be processed in the first exchanger 1 has the same length of course as the gas to be processed in the second exchanger 2.

The second exchanger 2 brings about heat exchange with a refrigerating fluid which is introduced into the portion 20 by means of an inlet 201 and outlet 202, respectively, and which travels through the second exchanger 2 in accordance with a course R preferably in counter-current with respect to the course P of the gas to be processed.

In greater detail, the second exchanger 2 will have such dimensions, in accordance with methods which will be set out below, that the water vapour is at the condensation temperature at the outlet thereof.

The course P of the gas to be processed therefore continues into a condensate discharge portion 30 of the box-like body, inside which portion 30 the course P inverts its direction, continuing towards a second vertical portion 40 parallel with and beside the first vertical portion 20.

There is arranged inside the second vertical portion 40 a condensate separator 4, for example, constructed by means of coalescence systems and/or a relaxing chamber, which intercepts the flow of gas in such a manner that dry gas continues in a vertical direction along the course P and the condensed component thereof is retained by the separator 4 in order then to fall owing to gravitational force in the discharge portion 30 and to be discharged via the outlet 301. The discharge portion may also have another security outlet 302 which has a higher depth than the outlet 301 and which intervenes in the event of excessive filling of the portion 30.

As the coalescence system there may be used, for example, a demister which substantially comprises a mattress of wire of steel or aluminium or plastics material, whose material is selected on the basis of the application and the type of droplets to be coalesced. With regard to the relaxing chamber, however, which could be used in combination with or as an alternative to the coalescence system, this is substantially a chamber which brings about a reduction in the rate of flow so as to promote the separation of the condensed component.

Finally, the course P of the gas terminates at a second horizontal portion opposite the portion entering the first exchanger so as to bring about a heat exchange with the gas which is in turn introduced into the first exchanger 1 by means of the inlet 101.

After that heat exchange has occurred, the gas is discharged from the apparatus 100 by way of an outlet 102 constructed by means of an extension piece which is positioned beside the inlet 101 in a lower or higher position relative thereto on the basis of the specific structural requirements.

It is therefore possible to observe that a heat exchange takes place in the first exchanger 1 between the gas to be processed at the inlet into the apparatus 100 and the dry gas being discharged from the condensate separator 4. In the second exchanger 2, however, the gas being discharged from the first exchanger 1 is cooled by means of a refrigerating fluid or other means suitable for the purpose (cold fluid).

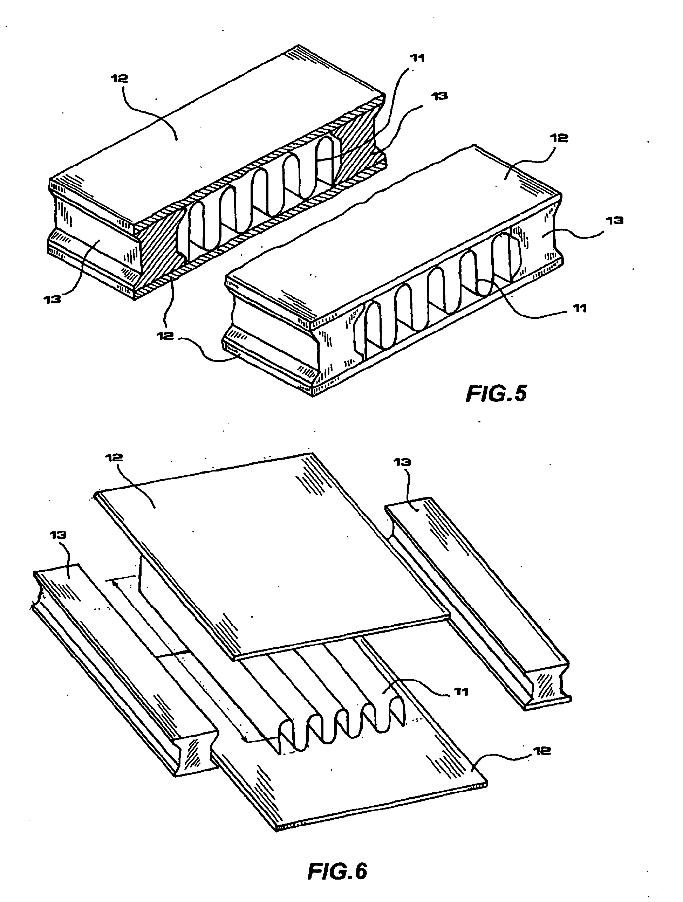

With reference to Figures 4 to 6, therefore, both the heat exchangers of the apparatus according to the present invention are of the type "plate/fin", that is to say, they are constructed by means of a plurality of superimposed plates 12 which alternate with a group of corrugated fins 11. Those exchangers have a series of fins 11 which are arranged on superimposed levels which are separated from the plates 12. The levels defined in that manner are alternately flowed through by the two fluids having a different thermal level, which therefore exchange energy through the plate 12 which separates two adjacent levels.

The exchanger is therefore laterally delimited by means of bars 13 which delimit the flow of gas, or more generally the fluid, therein and confer structural rigidity on the exchanger, respectively.

As indicated above, the exchangers 1, 2 according to the present invention have longitudinal extents which are equal to each other and which are defined by means of a longitudinal extent I of the fins 11 which will each form a single level of the exchanger.

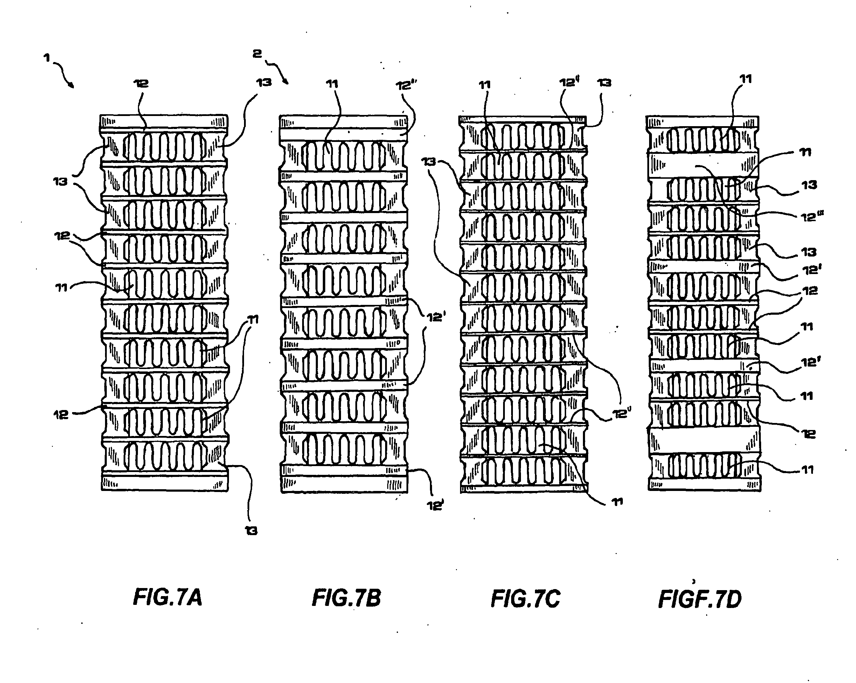

In order to differentiate between the heat exchange performance levels thereof, however, the exchangers 1 and 2 have plates 12 of different thicknesses. As may be observed in Figures 7A to 7D, by the thickness of the plates 12 being varied, for the same total spatial requirement of the exchanger, there may be obtained a different number of levels defined by the number of corrugated fins which are used in the exchanger, for the same total spatial requirement of the exchangers, defined in terms of volume occupied inside the box-like body. It is clear that, the greater the number of levels, the greater the heat exchange which occurs in the exchanger will be.

That feature therefore allows use of a series of components having common characteristics, that is to say, the box-like body, with the relevant inlets and outlets and the fins 11 used in the exchangers, with the thickness of the plates 12 which represent a component of modest cost then simply being varied so as to adapt the apparatus to the effective design requirements.

More specifically, the exchangers will have dimensions, and in particular a longitudinal extent I, which are constant apart from the effectiveness levels of heat exchange associated with the design data and the exchanger will be dimensioned simply using plates of different thicknesses and, therefore, a greater or smaller number of levels.

In the present case, for example, the first heat exchanger 1 carries out a greater heat exchange and consequently uses a greater number of levels and plates 12 of smaller dimensions, with respect to the second exchanger 2 which has plates 12' of greater thickness. Figures 7C and 7D illustrate other possible constructions for the heat exchangers, in particular with non-constant thicknesses of the plates at the different levels.

The present invention allows substantial simplification of the production phase of the apparatuses for drying gas because it will be sufficient to provide a plurality of corrugated fins 11 of standard length and height which will be associated with plates 12 having different thicknesses in order to construct the first and the second exchanger in such a manner that they have the same spatial requirement, respectively, and to be received in the box-like body. Therefore, this solution allows a limit on the number of different components required in order to construct the apparatus 100 with a resultant saving from the economic point of view and logistical simplification.

Finally, in addition to the advantages described above, the apparatus according to the present invention, once the minimum requirements of the heat exchange required have been satisfied during the sizing step, that is to say, it has been verified that the heat exchanger is effectively carrying out the exchange for which it is intended, affords the opportunity of increasing the cross-section of flow in use of thinner plates so as to reduce charge losses. It is evident that there will also be a resultant increase in heat exchange with respect to the minimum exchange required which will not in any manner impair the operation of the apparatus rather than improving the performance levels thereof.

## Claims

1. An apparatus (100) for drying a gas to be processed comprising a first heat exchanger (1), a second heat exchanger (2) and a condensate separator (4) which are received inside a box-like body (10, 20, 30, 40, 50), said first and second exchangers (1, 2) comprising a plurality of corrugated fins (11) interposed between heat exchange plates (12, 12', 12") so as to define a course for the gas to be processed and/or for a heat exchange fluid along longitudinal portions, said fins (11) being distributed in each exchanger at levels one above the other which are separated by said plates (12, 12', 12"), **characterized in that** the first and second exchangers (1, 2) are provided in such a manner that a flow of gas in the first exchanger (1) is substantially perpendicular to a flow of gas in the second exchanger (2) in an L-like manner, and **in that** the first and second exchangers (1, 2) extend over said longitudinal portions (10, 20) which are substantially equal to each other, those longitudinal portions (10, 20) being defined by the longitudinal extent (I) of the fins (11), the heat exchange plates (12) of the first exchanger (1) having a different thickness with respect to the plates (12') of the second exchanger (2) and the first and second exchangers (1, 2) having substantially identical spatial requirements.

2. An apparatus (100) according to claim 1, wherein the fins (11) of the first and second exchangers (1, 2) have substantially similar dimensional characteristics.

3. An apparatus (100) according to claim 1 or claim 2, wherein the fins (11) are constructed by means of a metal sheet which is folded and/or cut and/or punched and/or corrugated.

4. An apparatus (100) according to any one of the preceding claims, wherein the thickness of the plates (12, 12', 12") is selected in accordance with the heat exchange which is carried out in the first heat exchanger (1) and the second heat exchanger (2).

5. An apparatus (100) according to any one of the preceding claims, wherein the box-like body is provided with an inlet (101) for the gas to be processed and an outlet (102) for the processed gas, the outlet (102) being constructed in an extension piece positioned beside the inlet (101) and provided beside it.

6. An apparatus (100) according to any one of the preceding claims, wherein the gas to be processed follows an operating course (P) which is defined by:
- a first horizontal portion (10) defined by the first exchanger (1);
- a connection portion defined by a connection element (50) between the first and the second exchanger (1, 2);
- a first vertical portion of the second exchanger (20);
- an inversion portion at a condensate exchange portion (30), a second vertical portion (40) at a condensate separator (4); and
- a second horizontal portion defined by the course of the heat exchange gas of the first exchanger (1).

7. An apparatus (100) according to claim 6, wherein the condensate exchange portion (30) is defined at a lower portion of the box-like body.

8. An apparatus (100) according to either claim 6 or claim 7, wherein the first horizontal portion (10) has the same length (I) as the first vertical portion (20), the heat exchange which takes place in those portions (10, 20) being different.

9. A method for constructing an apparatus (100) for drying a gas to be processed according to any of the preceding claims comprising the steps of:
- providing a plurality of corrugated fins (11);
- providing a first and a second group of plates (12, 12'), the plates (12) of the first group having a different thickness from that of the plates (12') of the second group;
- associating a predetermined number of fins (11) with a plurality of plates (12) of the first group so as to construct a first heat exchanger (1) and a second predetermined number of fins with a plurality of plates (12') of the second group so as to construct a second heat exchanger (2), the first and second exchangers (1, 2) having substantially identical spatial requirements in terms of the total volume occupied;
- providing a box-like body in which there are defined a horizontal portion (10) and a vertical portion (20) which have a substantially constant length and which are provided to receive the first and second heat exchangers (1, 2), respectively;
- assembling the first and second exchangers (1, 2) and a condensate separator (4) in the box-like body in such a manner that there is defined an operating course (P) for the gas to be processed, in which the gas passes successively through longitudinal portions of the first exchanger (1) and the second exchanger (2) in an L-like manner, and through the condensate separator (4).

10. A method for constructing an apparatus (100) according to claim 9, wherein the thickness of the plates in the first and second groups is selected on the basis of the heat exchange which takes place in total in the first exchanger (1) and in the second exchanger (2), respectively.

## Patentansprüche

1. Vorrichtung (100) zum Trocknen eines zu verarbeitenden Gases, umfassend einen ersten Wärmetauscher (1), einen zweiten Wärmetauscher (2) und einen Kondensatabscheider (4), die im Innern eines kastenartigen Körpers (10, 20, 30, 40, 50) aufgenommen sind, wobei die ersten und zweiten Tauscher (1, 2) eine Vielzahl von gewellten Rippen (11) umfassen, die zwischen Wärmetauscherplatten (12, 12', 12") eingefügt sind, um einen Weg für das zu verarbeitende Gas und/oder für ein Wärmetauscherfluid entlang eines längsgerichteten Bereiche zu definieren, wobei die Rippen (11) in jedem Tauscher auf Ebenen übereinander verteilt sind, welche durch die Platten (12, 12', 12") getrennt sind, **dadurch gekennzeichnet, dass** die ersten und zweiten Tauscher (1, 2) so vorgesehen sind, dass eine Gasströmung im ersten Tauscher (1) im Wesentlichen senkrecht zu einer Gasströmung im zweiten Tauscher (2) L- förmig verläuft, und dass sich die ersten und zweiten Tauscher (1, 2) über die längsgerichteten Bereiche ((10, 20) erstrecken, die einander im Wesentlichen gleich sind, wobei diese längsgerichteten Bereiche (10, 20) durch die längsgerichtete Erstreckung (I) der Rippen (11) definiert sind, die Wärmetauscherplatten (12) des ersten Tauschers (1) eine in Bezug auf die Platten (12') des zweiten Tauschers (2) unterschiedliche Dicke aufweisen, und die ersten und zweiten Tauscher (1, 2) einen im Wesentlichen identischen Platzbedarf aufweisen.

2. Vorrichtung (100) nach Anspruch 1, wobei die Rippen (11) der ersten und zweiten Tauscher (1, 2) im Wesentlichen ähnliche Maßeigenschaften aufweisen.

3. Vorrichtung (100) nach Anspruch 1 oder Anspruch 2, wobei die Rippen (11) mittels eines Metallblechs ausgebildet sind, das gefaltet und/oder geschnitten und/oder gestanzt und/oder gewellt ist.

4. Vorrichtung (100) nach einem der vorhergehenden Ansprüche, wobei die Dicke der Platten (12, 12', 12") gemäß dem Wärmeaustausch gewählt ist, der im ersten Wärmetauscher (1) und dem zweiten Wärmetauscher (2) ausgeführt wird.

5. Vorrichtung (100) nach einem der vorhergehenden Ansprüche, wobei der kastenartige Körper mit einem Einlass (101) für das zu verarbeitende Gas und einem Auslass (102) für das verarbeitete Gas versehen ist, wobei der Auslass (102) in einem Verlängerungsstück eingerichtet ist, das im Innern des Einlasses (101) positioniert ist und daneben vorgesehen ist.

6. Vorrichtung (100) nach einem der vorhergehenden Ansprüche, wobei das zu verarbeitende Gras einem Verarbeitungsweg (P) folgt, der definiert ist durch:
- einen ersten horizontalen Bereich (10), der vom ersten Tauscher (1) definiert ist;
- einen Verbindungsbereich, der durch ein Verbindungselement (50) zwischen den ersten und zweiten Tauscher (1, 2) definiert ist;
- einen ersten vertikalen Bereich des zweiten Tauschers (20);
- einen Umkehrbereich an einem Kondensat-Austauschbereich (30), einen zweiten vertikalen Bereich (40) an einem Kondensatabscheider (4); und
- einen zweiten horizontalen Bereich, der durch den Weg des Wärmeaustauschgases des ersten Tauschers (1) definiert ist.

7. Vorrichtung (100) nach Anspruch 6, wobei der Kondensat-Austauschbereich (30) an einem unteren Bereich des kastenartigen Körpers angeordnet ist.

8. Vorrichtung (100) nach Anspruch 6 oder Anspruch 7, wobei der erste horizontale Bereich (10) die gleiche Länge (I) wie der erste vertikale Bereich (20) aufweist, wobei sich der Wärmeaustausch, der in diesen Bereichen (10, 20) stattfindet, voneinander unterscheidet.

9. Verfahren zum Aufbauen einer Vorrichtung (100) zum Trocknen eines zu bearbeitenden Gases nach einem der Vorhergehenden Ansprüche, das die folgenden Schritte aufweist:
- Vorsehen einer Vielzahl von gewellten Rippen (11);
- Vorsehen von ersten und zweiten Gruppen von Platten (12, 12'), wobei die Platten (12) der ersten Gruppe eine andere Dicke als die Platten (12') der zweiten Gruppe aufweisen;
- Zuordnen einer vorgegebenen Anzahl von Rippen (11) zu einer Vielzahl von Platten (12) der ersten Gruppe, um einen ersten Wärmetauscher (1) aufzubauen, und einer zweiten vorgegebenen Anzahl von Rippen mit einer Vielzahl von Platten (12') der zweiten Gruppe, um einen zweiten Wärmetauscher (2) aufzubauen, wobei die ersten und zweiten Tauscher (1, 2) hinsichtlich des beanspruchten Gesamtvolumens im Wesentlichen ähnliche Raumanforderungen aufweisen.
- Vorsehen eines kastenartigen Körpers, in dem ein horizontaler Bereich (10) und ein vertikaler Bereich (20) definiert sind, die eine im Wesentlichen konstante Länge aufweisen und die zum Aufnehmen der ersten bzw. zweiten Wärmetauscher (1, 2);
- Montieren der ersten und zweiten Tauscher (1, 2) und eines Kondensatabscheiders (4) im kastenartigen Körper, sodass darin ein Verarbeitungsweg (P) für das zu verarbeitende Gas definiert wird, wobei das Gas nacheinander L-förmig den längsgerichteten Bereich des ersten Tauschers (1) und des zweiten Tauschers (2) durchströmt und den Kondensatabscheider durchströmt.

10. Verfahren zum Aufbauen einer Vorrichtung (100) nach Anspruch 9, wobei die Dicke der Platten der ersten und zweiten Gruppe basierend auf dem Wärmeaustausch ausgewählt wird, der insgesamt im ersten Tauscher (1) und im zweiten Tauscher (2) stattfindet.

## Revendications

1. Appareil (100) pour sécher un gaz à traiter comprenant un premier échangeur de chaleur (1), un second échangeur de chaleur (2) et un séparateur de condensat (4) qui sont reçus à l'intérieur d'un corps en forme de boîte (10, 20, 30, 40, 50), lesdits premier et second échangeurs de chaleur (1, 2) comprenant une pluralité d'ailettes ondulées (11) intercalées entre des plaques d'échange de chaleur (12, 12', 12") afin de définir une trajectoire pour le gaz à traiter et/ou pour un fluide d'échange de chaleur le long parties longitudinales, lesdites ailettes (11) étant réparties dans chaque échangeur à des niveaux les uns au-dessus des autres qui sont séparés par lesdites plaques (12, 12', 12"), **caractérisé en ce que** les premier et second échangeurs (1, 2) sont prévus de sorte qu'un écoulement de gaz dans le premier échangeur (1) est sensiblement perpendiculaire à un écoulement de gaz dans le second échangeur (2) d'une manière en forme de L, et **en ce que** les premier et second échangeurs (1, 2) s'étendent sur lesdites parties longitudinales (10, 20) qui sont sensiblement égales entre elles, ces parties longitudinales (10, 20) étant définies par l'étendue longitudinale (I) des ailettes (11), les plaques d'échange de chaleur (12) du premier échangeur (1) ayant une épaisseur différente par rapport aux plaques (12') du second échangeur (2) et aux premier et second échangeurs (1, 2) qui ont des exigences spatiales sensiblement identiques.

2. Appareil (100) selon la revendication 1, dans lequel les ailettes (11) des premier et second échangeurs (1, 2) ont des caractéristiques dimensionnelles sensiblement similaires.

3. Appareil (100) selon la revendication 1 ou la revendication 2, dans lequel les ailettes (11) sont construites au moyen d'une tôle métallique qui est pliée et/ou découpée et/ou poinçonnée et/ou ondulée.

4. Appareil (100) selon l'une quelconque des revendications précédentes, dans lequel l'épaisseur des plaques (12, 12', 12") est choisie selon l'échange de chaleur qui est réalisé dans le premier échangeur de chaleur (1) et le second échangeur de chaleur (2).

5. Appareil (100) selon l'une quelconque des revendications précédentes, dans lequel le corps en forme de boîte est prévu avec une entrée (101) pour le gaz à traiter et une sortie (102) pour le gaz traité, la sortie (102) étant construite dans une pièce d'extension positionnée à côté de l'entrée (101) et prévue à côté d'elle.

6. Appareil (100) selon l'une quelconque des revendications précédentes, dans lequel le gaz à traiter suit une trajectoire opérationnelle (P) qui est définie par :
une première partie horizontale (10) définie par le premier échangeur (1) ;
une partie de raccordement définie par un élément de raccordement (50) entre le premier et le second échangeur (1, 2) ;
une première partie verticale du second échangeur (20) ;
une partie d'inversion au niveau d'une partie d'échange de condensat (30), une seconde partie verticale (40) au niveau d'un séparateur de condensat (4) ; et
une seconde partie horizontale définie par la trajectoire du gaz d'échangeur de chaleur du premier échangeur (1).

7. Appareil (100) selon la revendication 6, dans lequel la partie d'échange de condensat (30) est définie au niveau d'une partie inférieure du corps en forme de boîte.

8. Appareil (100) selon la revendication 6 ou la revendication 7, dans lequel la première partie horizontale (10) a la même longueur (l) que la première partie verticale (20), l'échange de chaleur qui a lieu dans ces parties (10, 20) étant différent.

9. Procédé pour construire un appareil (100) afin de sécher un gaz à traiter selon l'une quelconque des revendications précédentes, comprenant les étapes consistant à :
prévoir une pluralité d'ailettes ondulées (11) ;
prévoir un premier et un second groupe de plaques (12, 12'), les plaques (12) du premier groupe ayant une épaisseur différente de celle des plaques (12') du second groupe ;
associer un nombre prédéterminé d'ailettes (11) avec une pluralité de plaques (12) du premier groupe afin de construire un premier échangeur de chaleur (1) et un second nombre prédéterminé d'ailettes avec une pluralité de plaques (12') du second groupe afin de construire un second échangeur de chaleur (2), les premier et second échangeurs (1, 2) ayant des exigences spatiales sensiblement identiques en termes de volume total occupé ;
prévoir un corps en forme de boîte dans lequel on définit une partie horizontale (10) et une partie verticale (20) qui ont une longueur sensiblement constante et qui sont prévues afin de recevoir respectivement les premier et second échangeurs de chaleur (1, 2) ;
assembler les premier et second échangeurs (1, 2) et un séparateur de condensat (4) dans le corps en forme de boîte de sorte que l'on définit une trajectoire opérationnelle (P) pour le gaz à traiter, dans laquelle le gaz passe successivement à travers les parties longitudinales du premier échangeur (1) et du second échangeur (2) d'une manière en forme de L et à travers le séparateur de condensat (4).

10. Procédé pour construire un appareil (100) selon la revendication 9, dans lequel l'épaisseur des plaques dans les premier et second groupes est choisie sur la base de l'échange de chaleur qui a lieu au total dans le premier échangeur (1) et dans le second échangeur (2), respectivement.
